# EUROPEAN PATENT APPLICATION

(11) **EP 4 613 714 A1**
(43) Date of publication of application: **10.09.2025**
(21) Application number: 25161300.6
(22) Date of filing: 03.03.2025
(51) Int. Cl.: C02F 1/32, C02F 1/72, C02F 1/78, C02F 1/28, C02F 1/52, C02F 101/34

(54) **WATER PURIFICATION SYSTEM AND WATER PURIFICATION METHOD**

(30) Priority: 04.03.2024 JP 2024032249
(71) Applicant: Kaiga, Nobuyoshi, Tokyo 165-0023 (JP)
(72) Inventor: Kaiga, Nobuyoshi, Tokyo 165-0023 (JP)
(74) Representative: Grünecker Patent- und Rechtsanwälte PartG mbB

(57) **Abstract**

The problem to be solved by the present invention is to provide an effective water purification system.

A water purification system 1 comprises a hydrogen peroxide addition section 31 for adding hydrogen peroxide to a water to be treated, a light irradiation section 32 for irradiating the water to be treated with light having a wavelength of 320 nm, and an ozone treatment section 33 for treating with ozone. A humic substance in the water to be treated is decomposed by light irradiation in the light irradiation section 32, and the remaining substance is decomposed by ozone treatment in the ozone treatment section 33.

## Description

### FIELD OF THE INVENTION

The present invention relates to a water purification system and a water purification method for subjecting water including a humic substance such as fulvic acid to a decomposition treatment to be purified.

### BACKGROUND OF THE INVENTION

In recent years, water purification has been dominated by methods that oxidatively decompose object substances in a water to be treated in a lump by strong oxidation using ozone, OH radicals, and so forth. The following prior arts are exemplified as these water purification techniques.

First, it is exemplified by the following water treatment apparatus for decomposing organic compounds in a water to be treated, comprising:
a reaction chamber into which the water to be treated is made to flow,
an ozone supplying means supplying ozone to the reaction chamber,
a first ultraviolet-ray irradiation means irradiating the ultraviolet ray having a wavelength of 254 nm in the reaction chamber,
a second ultraviolet-ray irradiation means irradiating the ultraviolet ray having a wavelength of 220 nm in the reaction chamber,
an ultraviolet-ray irradiation quantity control means controlling an irradiation quantity of the ultraviolet rays irradiated from the first and second ultraviolet-ray irradiation means, and
a hydrogen peroxide concentration detection means detecting a hydrogen peroxide concentration of the water to be treated,
wherein when the hydrogen peroxide concentration rises, the ultraviolet-ray irradiation quantity control means controls the second ultraviolet-ray irradiation means to increase the irradiation quantity of the ultraviolet ray having the wavelength of 220 nm (Patent Document 1).

Next, it is exemplified by the following UV-assisted advanced-ozonation water treatment system, comprising:
a water treating tank into which a water to be treated flows from an inlet channel,
an ozonized gas generator supplying an ozonized gas,
an ozonic water tank producing ozonic water by making a portion of the water to be treated contact with the ozonized gas while the tank is pressurized to dissolve the ozonized gas into the water to be treated,
a UV light source disposed of the water treating tank and having a UV-radiating surface extending in a longitudinal direction along the flow of the water to be treated, and
an ozonic water jetting device for jetting the ozonic water supplied from the ozonic water tank onto the UV-radiating surface of the UV light source at a right angle or an inclination angle to the water to be treated (Patent Document 2).

The prior arts described in these patent documents are water treatments by promoted oxidation techniques (Advanced Oxidation Process (AOP)) using ozone decomposition, ultraviolet rays, hydrogen peroxide, etc.

These techniques utilize the strong oxidation power of ozone and OH radicals and are widely used nowadays as water purification techniques.

However, said techniques cannot effectively subject water containing a humic substance such as fulvic acid to a decomposition treatment. Although ozone and OH radicals have strong oxidative decomposition ability for many substances, when the humic substance is included in the water to be treated, the oxidative decomposition reaction only partially proceeds and generates a large number of by-products, resulting in inefficient processing.

Thus, an effective water purification system that can solve the above problems in water purification is required.

### PRIOR ART

### PATENT DOCUMENTS

Patent Document 1: JP 2003-326284 A
Patent Document 2: JP 2004-97992 A

### SUMMARY OF THE INVENTION

### PROBLEMS TO BE SOLVED BY THE INVENTION

The problem to be solved by the present invention is to provide a water purification system that effectively treats water containing a humic substance.

### MEANS FOR SOLVING THE PROBLEMS

The first invention is a water purification system comprising a hydrogen peroxide addition section for adding hydrogen peroxide to a water to be treated, a light irradiation section for irradiating the water to be treated with light having a wavelength of 320 nm, and an ozone treatment section for treating the water to be treated from the light irradiation section with ozone. The second invention is a water purification method comprising a first step for adding hydrogen peroxide to a water to be treated, a second step for irradiating the water to be treated with light having a wavelength of 320 nm, and a third step for treating the water to be treated after the second step with ozone.

### ADVANTAGES OF INVENTION

The present invention is expected to effectively decompose a humic substance such as fulvic acid by the addition of hydrogen peroxide and irradiation with light having a wavelength of around 320 nm. Moreover, the present invention is expected to effectively treat a water to be treated in combination with the treatment of the humic substance and the subsequent treatment of the toxic substance by ozone treatment according to the present method.

### BRIEF DESCRIPTION OF THE DRAWINGS

Fig. 1 is a schematic view showing an example of a whole image of a water purification system.
Fig. 2 is a schematic view showing an example of the decomposition treatment section of the water purification system shown in Fig. 1.
Fig. 3 is a graph showing measurement results of fluorescence spectrum intensities of fulvic acid when a light irradiation with a wavelength of 320 nm is repeated.
Fig. 4 is a graph showing measurement results of fluorescence spectrum intensities of fulvic acid when hydrogen peroxide solution is added and light having each predetermined wavelength is irradiated.

### EMBODIMENTS OF THE INVENTION

An embodiment of the present invention is described below.

### [Example 1]

In the present invention, a water to be treated is water that is taken from a river and is before water purification at a water treatment plant.

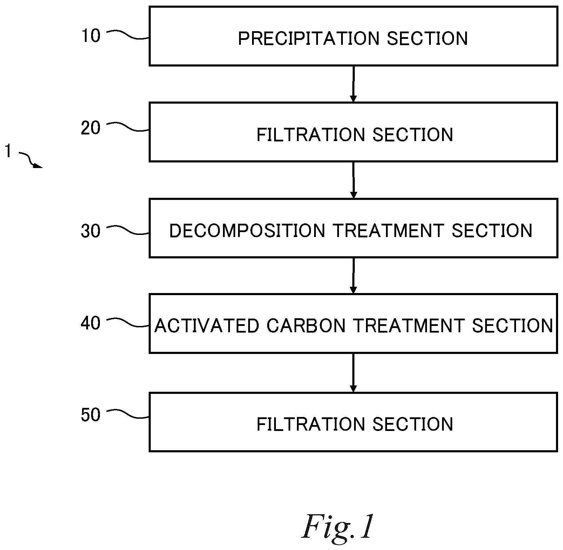

An example of a whole constitution of a water purification system 1 including technical elements of the present invention is described. Fig. 1 is a rough schematic view showing a constitution of the water purification system 1. A practical technical constitution of a water purification system varies widely and the constitution of the water purification system is not limited to that shown below.

Light irradiation and ozone treatment for the present invention may be those based on the techniques described in the patent documents or on other prior arts. For example, for the light irradiation, the ultraviolet irradiating apparatus of TrojanUV series (trademark, Trojan Technologies Inc) may be used for ultraviolet-ray irradiation with a desired wavelength, and for the ozone treatment, the ozone generator of TGOGS series (trademark, Toshiba Infrastructure Systems & Solutions Corporation) may be used for the ozone treatment with a desired ozone concentration. It is omitted to describe a pump, a power supply, and other general techniques related to the system.

First, the water to be treated is taken into a precipitation section 10. In the precipitation section 10, suspended substances such as mud in the water to be treated are submerged and removed. The precipitation section 10 can be, but is not limited to, a type in which the suspended substances in the water to be treated spontaneously precipitate or the type in which fine particles are made into large particles ("flocks") by a flocculant such as polyaluminum chloride.

Next, the water to be treated is sent to a filtration section 20. In the filtration section 20, anything not removed in the precipitation section 10, such as the fine particles in the water to be treated, is removed by a filtration layer such as gravel or sand.

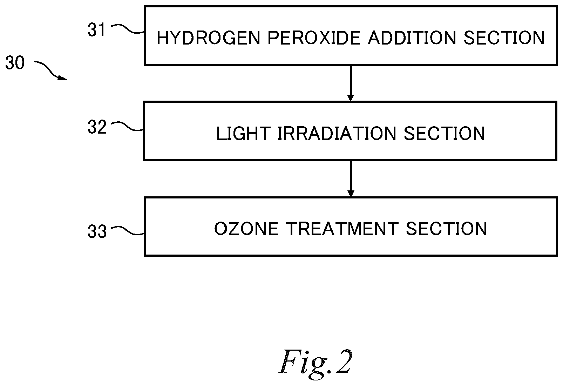

Next, the water to be treated is sent to a decomposition treatment section 30. Fig. 2 is a schematic view showing an example of the decomposition treatment section 30 of the water purification system 1. As shown in Fig. 2, the decomposition treatment section 30 comprises a hydrogen peroxide addition section 31, a light irradiation section 32, and an ozone treatment section 33. In this regard, for convenience, the hydrogen peroxide addition section 31, the light irradiation section 32, and the ozone treatment section 33 are shown in this order in Fig. 2. However, the treatment sequence of the hydrogen peroxide addition and the light may be simultaneous or reversed.

The object substances in the water to be treated are decomposed in the decomposition treatment section 30 as follows. First, hydrogen peroxide is added to the water to be treated in the hydrogen peroxide addition section 31. The hydrogen peroxide addition section 31 does not need to be strictly an independent component of the water purification system 1, but may simply be a part where the hydrogen peroxide is added or may be served by the light irradiation section 32. A method of adding hydrogen peroxide is not limited, and the hydrogen peroxide in a predetermined container may be automatically injected or manually injected.

Next, the water to be treated is irradiated with light having a wavelength of about 320 nm in the light irradiation section 32. The irradiated light is mainly for decomposing an organic complex such as fulvic acid and is of a longer wavelength than that of a light generally used in water treatment. The apparatus for irradiating light is not limited as described above, and any method or form of light irradiation may be used as long as it can achieve the light having the desired wavelength.

In the present invention, the wavelength of the light to be irradiated in the light irradiation section 32 does not need to be exactly 320 nm but may include wavelengths around 320 nm. In this regard, the wavelength of the light in the present invention should not be a wavelength that causes a rapid partial decomposition of a humic substance by OH radicals and so forth as when light having a wavelength in conventional treatment (for example, within a wavelength range of 235 to 250 nm) is used. Thus, the wavelength of the light to be irradiated should be a wavelength in the range that does not involve the generation of OH radicals along with added hydrogen peroxide, and in other words, can be defined as a wavelength that is not absorbed by hydrogen peroxide (does not generate OH radicals) and that does not contribute to the decomposition of the humic substance by the light irradiation alone.

Next, the water to be treated is subjected to an ozone decomposition treatment in the ozone treatment section 33. In general, the ozone concentration is in the range of 10 to 20 mg/L. However, the ozone concentration is not limited thereto. The apparatus for ozone generation is not limited as described above, and any method or form of ozone generation may be used as long as it can achieve the desired concentration.

The ozone treatment section 33 is a part that treats the remaining substance after the decomposition treatment in the light irradiation section 32. Thus, a strong decomposition treatment with a generation of OH radicals may be performed in the ozone treatment section 33, unlike the decomposition treatment in the light irradiation section 32. For example, a treatment accompanied by irradiation with light having a wavelength absorbed by the hydrogen peroxide added in the hydrogen peroxide addition section 31 may be performed.

Next, the water to be treated is sent to an activated carbon treatment section 40. In the activated carbon treatment section 40, decomposed and undecomposed substances in the water to be treated are treated by an adsorption action of activated carbon and a decomposition action of microorganisms in the activated carbon. As the activated carbon treatment section 40, it is exemplified a pond filled with the activated carbon on which the microorganisms are supported.

Next, the water to be treated is sent to a filtration section 50. The water to be treated is filtrated in the filtration section 50. A filtration layer of the filtration section 50 may be that of sand as the filtration section 20, but it is not limited thereto. After filtration, the water to be treated is supplied to various locations after being subjected to treatments such as chlorine injection, as needed.

Next, an effectiveness verification test for the hydrogen peroxide addition section 31 and the light irradiation section 32 is described. The effectiveness verification test was performed at a mainly laboratory level to verify the effects of a purification function (decomposition function for the object substances in the water to be treated).

As the water to be treated, the object substances to be treated, hydrogen peroxide added in the hydrogen peroxide addition section 31, and the light irradiation section 32, the following items were respectively used.
- Water to be treated (sample): Water from a water treatment plant sourced from river water in a certain area (water after filtrating water before water purification with a filter of 0.45µm)
- Measurement object in an instrumental analysis: fulvic acid
- Added substance: hydrogen peroxide solution (concentration of 30%)
- Light irradiation: wavelength of 320 nm (UV intensity of 3 mW/cm²)

In this test, fluorescence spectra of fulvic acid were measured by light irradiation using a fluorescence spectroscopic analyzer (Shimadzu Corp. RF-5300). The fluorescence spectroscopic analyzer measured the decomposition treatment by the light irradiation in the light irradiation section 32 as well as the water to be treated after the decomposition treatment. Namely, the conditions shown below were for the decomposition of the water to be treated at a wavelength of 320 nm, as well as for the measurement of fulvic acid.

Measurements in the instrumental analysis were performed in the fluorescence spectrum at a fluorescence wavelength of 380 to 550 nm, which was emitted when fulvic acid in the excited state returned to the ground state (UV intensity of 3 mW/cm², irradiation time of 88 seconds per cycle, 20°C). In a 1 cm thick 4-sided quartz cell (light incident part of 2.4 × 8 mm area), 3 drops of the hydrogen peroxide solution (0.004 mL per drop) were added to a sample of 3.6 mL by pipette, and then the sample was scanned with the fluorescence spectroscopic analyzer. The samples were adjusted and tested on a case-by-case basis. Fluorescence spectra of fulvic acid were observed at a peak wavelength of 430 nm.

### <Result 1>

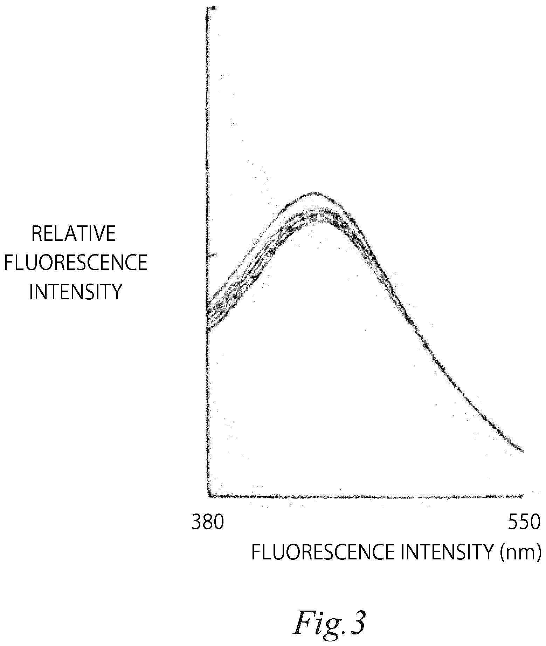

Fig. 3 is a graph showing measurement results of fluorescence spectrum intensities of fulvic acid when the light having the wavelength of 320 nm is repeatedly irradiated to the water to be treated. Figure 3 shows that the fluorescence spectrum intensity of fulvic acid decreases with each light irradiation. The decrease was about 3% per light irradiation.

### <Result 2>

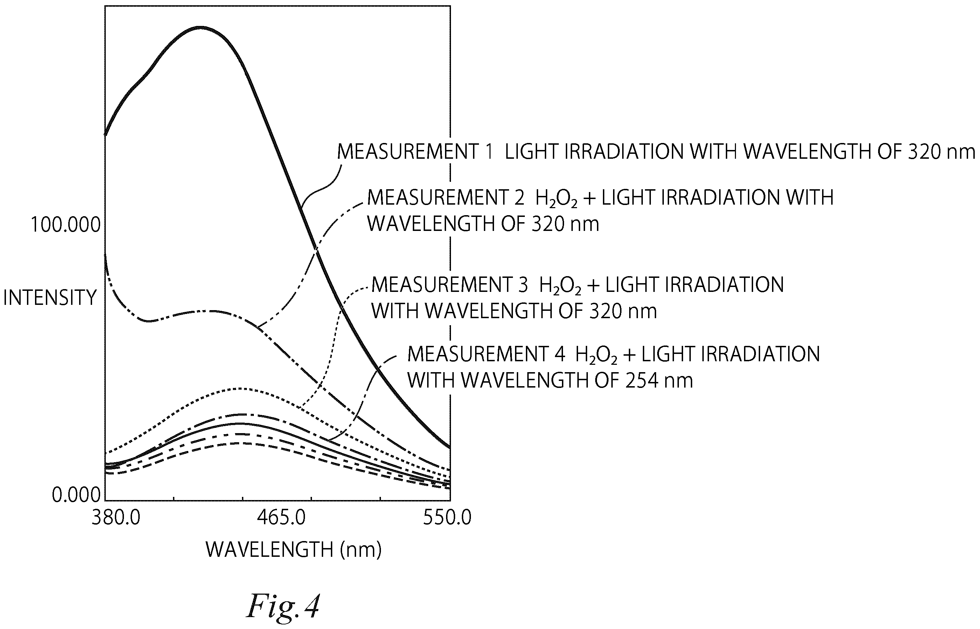

Fig. 4 is a graph showing measurement results of the fluorescence spectrum intensities of fulvic acid when the hydrogen peroxide solution is added to and light having each predetermined wavelength is irradiated to the water to be treated. In the graph, the fluorescence spectrum of the top intensity corresponds to the case in which the light having the wavelength of 320 nm is irradiated (Measurement 1). The fluorescence spectrum of the next lower intensity corresponds to the case in which the hydrogen peroxide solution is added to the water to be treated after Measurement 1 and the light having the wavelength of 320 nm is irradiated (Measurement 2). The fluorescence spectrum of the next further lower intensity corresponds to the case in which the light having the wavelength of 320 nm is irradiated again after Measurement 2 (Measurement 3). The fluorescence spectrum of the next further lower intensity corresponds to the case in which light having a wavelength of 254 nm is irradiated several times after Measurement 3 (Measurement 4) (incidentally, this fluorescence spectrum is the result measured at the wavelength of 320 nm after the light irradiation with the wavelength of 254 nm).

From Result 2, it was confirmed that the decrease in the fluorescence spectrum intensity of fulvic acid was larger than that of Result 1. That is, it was confirmed that the light irradiation with the wavelength of 320 nm in the presence of hydrogen peroxide significantly decreased the fluorescence spectrum intensity of fulvic acid. It was confirmed that the decrease in the fluorescence spectrum intensity of fulvic acid by the light irradiation with the wavelength of 254 nm was not large compared to that by the light irradiation with the wavelength of 320 nm. This matter was confirmed by additional tests although the drawing was omitted.

The invention derived from the result of Example 1 is Example 2.

### [Example 2]

The fluorescence spectrum intensity of fulvic acid did not decrease significantly only by the light irradiation with the wavelength of 320 nm (Result 1), but decreased significantly in the presence of the hydrogen peroxide solution (Measurement 2 of Result 2). That is, it was suggested that the light irradiation with the wavelength of around 320 nm in the presence of hydrogen peroxide increased the effect of decomposing the humic substance.

Thus, it was suggested that the light having the wavelength of 320 nm, which was considered to have a low decomposition ability, had a large effect on the decomposition of the humic substance in the presence of the hydrogen peroxide solution. In this regard, when the hydrogen peroxide solution was just added to the water to be treated, the decrease in the fluorescence spectrum intensity of fulvic acid was not confirmed (drawing omitted). That is, it was suggested that the light irradiation with the wavelength of 320 nm was required in addition to the presence of hydrogen peroxide to decompose the humic substance and thus a synergistic decomposition effect could be obtained.

Moreover, it is suggested that the light irradiation with the wavelength of 320 nm produces few OH radicals because hydrogen peroxide has a high light absorption property in the wavelength range below 290 nm and the wavelength of 320 nm does not belong to the main absorption band of hydrogen peroxide. That is, it is suggested that the decomposition treatment of the humic substance in the present invention occurs by a mechanism in which fulvic acid is selectively decomposed, unlike an accelerated oxidation treatment which depends on an oxidative decomposition power of OH radicals.

In this regard, the inventor considers as follows. That is, when light having a short wavelength such as 254 nm or ozone, which are conventional means, is used to decompose the humic substance, strong decomposition reactions partially occur due to the OH radicals generated in the light irradiation section and its vicinity. This strong decomposition reaction produces a large number of by-products from the humic substance and does not proceed to the interior of the humic substance.

In contrast, although the energy of light having a long wavelength of 320 nm has almost no effect on the decomposition of the humic substance by itself, it is absorbed by the humic substance to make the humic substance an unstable state (state to react easily). The coexistence of hydrogen peroxide in this state leads to the effective decomposition of the humic substance.

A conventional ozone treatment requires a large amount of ozone to treat water containing the humic substance and is inefficient. This is because a large number of ozone molecules are consumed in the reaction with the humic substance. On the other hand, the treatment with light irradiation with the wavelength of 320 nm in the presence of hydrogen peroxide in advance makes it possible to perform treatment without relying on a large number of ozone molecules.

It is useful to use the present amount of fulvic acid as an indicator of whether the humic substance in the water to be treated has been adequately treated. By shifting to the ozone decomposition treatment based on the decrease in the present amount of fulvic acid to a predetermined value, it is possible to maintain the specified treatment quality of the water to be treated.

Based on the above, the following system is effective for water purification: the water purification system 1 comprising the hydrogen peroxide addition section 31 for adding hydrogen peroxide to the water to be treated, the light irradiation section 32 for irradiating the water to be treated with the light having a wavelength of around 320 nm, and the ozone treatment section 33 for treating the water to be treated from the light irradiation section with ozone 32.

In the water purification system 1, first, the humic substance contained in the water to be treated is subjected to the decomposition treatment by the addition of hydrogen peroxide and the light irradiation with the wavelength of 320 nm. Next, the remaining substance contained in the water to be treated is subjected to the decomposition treatment by ozone. This two-stage configuration makes it possible to preferentially treat the humic substance in the water to be treated and effectively decompose the substance contained in the water to be treated.

The remaining substance after the light irradiation in the earlier stage is decomposed by the ozone treatment in the later stage. The light having the wavelength of 320 nm for irradiation in the earlier stage does not cause a decomposition reaction by a strong oxidation power due to such as OH radicals from hydrogen peroxide. Therefore, the substances that are not decomposed in the earlier stage are decomposed by strong oxidation due to such as ozone, thereby making it possible to decompose various substances other than the humic substance.

In the ozone treatment section 33, light irradiation with a short wavelength such as 254 nm may be performed. This promotes the generation of OH radicals and more efficient decomposition of toxic components in the water to be treated. The decomposition treatment section 30 may be in a constitution in which the addition of hydrogen peroxide is repeated. The present invention does not deny the use of light irradiation with a short wavelength in combination with ozone treatment.

However, it is desirable that the treatment in the later stage is performed after the decomposition of the humic substance in the earlier stage has been performed to more than a predetermined degree. This is because when the humic substance is subjected to a strong oxidative decomposition in the latter stage, a large number of by-products are generated.

Based on the verification of repeated tests by measuring the fluorescence spectrum of fulvic acid, decomposing more than 90% of fulvic acid is one of the indicators for shifting to treatment in the later stage. For example, the treatment in the later stage may be performed on the basis that the fluorescence spectrum intensity is less than or equal to a predetermined value as a result of the measurement of fulvic acid in the treatment in the earlier stage. That is, the following constitution or method may be adopted: after the treatment in the earlier stage is performed for a predetermined time, the fulvic acid measurement is performed, and it is determined whether to shift to the treatment in the later stage.

Specifically, it is exemplified by the following water purification system 1, which comprises the hydrogen peroxide addition section 31 for adding hydrogen peroxide to the water to be treated, the light irradiation section 32 for irradiating the water to be treated with light having the wavelength of 320 nm, a measurement section in which a present amount of fulvic acid such as fluorescence spectrum intensity is an indicator, and the ozone treatment section 33 for treating the water to be treated from the light irradiation section with ozone 32.

Moreover, it is exemplified by the following water purification method, which comprises:
a first step for adding hydrogen peroxide to a water to be treated,
a second step for irradiating the water to be treated with light having a wavelength of 320 nm,
a third step for shifting the water to be treated to the next step when the decomposition treatment effect of the water to be treated by the first and second steps is measured in terms of fluorescence spectrum intensity and so forth using fulvic acid as an indicator and the measured value is less than the predetermined value, and
a fourth step for treating the water to be treated after the third step with ozone.

### INDUSTRIAL APPLICABILITY

The present invention can be used for water purification in water treatment plants. The present invention can also be used for water purification of polluted water with high environmental impact, including domestic wastewater and industrial wastewater.

### REFERENCE SIGNS LIST

- 1: water purification system
- 31: hydrogen peroxide addition section
- 32: light irradiation section
- 33: ozone treatment section

## Claims

1. A water purification system comprising:
a hydrogen peroxide addition section for adding hydrogen peroxide to a water to be treated containing fulvic acid,
a light irradiation section for irradiating the water to be treated from the hydrogen peroxide addition section with light having a wavelength of 320 nm, and
an ozone treatment section for treating the water to be treated after the fulvic acid is decomposed to more than a predetermined degree in the light irradiation section with ozone.

2. A water purification method comprising:
a first step for adding hydrogen peroxide to a water to be treated containing fulvic acid,
a second step for irradiating the water to be treated after the first step with light having a wavelength of 320 nm, and
a third step for treating the water to be treated in which the fulvic acid is decomposed to more than a predetermined degree in the second step with ozone.
